# EUROPEAN PATENT APPLICATION

(11) **EP 1 036 916 A1**
(43) Date of publication of application: **20.09.2000**
(21) Application number: 00302024.5
(22) Date of filing: 14.03.2000
(51) Int. Cl.: E21D 11/38, E03F 3/06, B29C 65/00, F16L 55/162

(54) **Linings for sewers**

(30) Priority: 15.03.1999 GB 9905912
(71) Applicant: Channeline Sewer Systems Limited, Dartford, Kent DA1 5BU (GB)
(72) Inventor: Florence, Geoffrey Lewis, Chatham, Kent ME4 6JE (GB)
(74) Representative: Ertl, Nicholas Justin

(57) **Abstract**

A sewer or tunnel lining section (14) comprises a base sheet (14a) and two side sheets (14b,14c) which in use are assembled to define the lining section. Longitudinal edges of the sheets are formed with continuous interlocking tongues and grooves to enable the sheets to be connected together using adhesive to form the lining section. Side walls of each tongue and of each groove taper along substantially their full length. Preferably the length of the tongue and depth of the groove is between 2 and 4 times the width thereof at the widest point. The shapes of the tongues and grooves are selected such that each side sheet (14b,14c) can be supported on a respective side of the base sheet (14a) solely by engagement of the tongue and groove connection (16) with the base sheet. This arrangement facilitates the assembly of each lining section from the individual sheets.

## Description

This invention relates to the lining of sewers, tunnels and the like. The invention is particularly concerned with lining systems which comprise a number of sections connected end-to-end, and in which each section comprises a number of connected sheets. Such lining systems are used to restore sewer or tunnel systems, the original structure of which has degraded over time.

In the particular example of sewers, the sewer gas hydrogen sulphide reacts to form sulphuric acid, which attacks the mortar within the brickwork of existing sewers.

Various lining systems are known, in which a plastics lining is provided within the existing sewer or tunnel system and in which a grout, for example concrete, is introduced into the spacing between the new liner and the original structure.

The resulting sewer or tunnel wall, which comprises the original decaying structure, the grout material and the lining, is subjected to a different distribution of stresses to the original structure. In particular, this change in the stress distribution can result in a large reduction or elimination of the tensile stress in the original wall, which tensile stress typically leads to cracking and crumbling of the original wall, particularly in cases where the mortar of a brickwork structure has been under chemical attack. The level of compressive stresses in the original structure will also be reduced by the introduction of the lining system. The lining also acts as a baffler to prevent further chemical decay of the original structure.

The Water Research Centre manual provides guidance governing the practice adopted in the lining of sewer systems or other tunnel structures. Different recommendations are given for the renovation of different existing systems. For example, the depth of an existing sewer system, or the height of the water table will influence the requirements of the lining system. The Water Research Centre manual specifies different types of lining structure which are appropriate in different circumstances.

A known lining system comprises a number of lining sections which may be butted end-to-end in order to form the lining for a sewer system. Each lining section comprises a number of arcuate portions, the portions being connected together by tongue and groove joints, for example as described in GB 2087456. The ability to divide each lining section into a number of components greatly reduces transportation costs, since stacking may then be possible. Typically, the joints between different portions of each lining section are positioned to coincide with positions of lowest stress in the original structure, for example the positions of lowest bending moment.

The structure described above satisfies the requirements of the so-called Type 1 structure defined in the Water Research Centre manual. However, a Type 1 system is not recommended for sewer systems for which resistance to external ground water is required. Therefore, a Type 1 system may not be appropriate either for deep sewer systems, or where there is a high water table. In such a case, a so-called Type 2 structure is recommended, in which the lining sections must act as a one piece pipe. Specifically, this means that the flexural strength of the joint and the bending stresses supported by the material of the joint must match or exceed the requirements set down for the structure of the pipe in general.

Until now, all lining systems satisfying the conditions of this Type 2 definition have been manufactured with one-piece lining sections. This increases the transport costs enormously.

According to the invention, there is provided a sewer or tunnel lining section comprising two or more sheets which in use are assembled to define the lining section, the section having a generally annular cross section, the shape of which is selected depending upon the shape of the sewer or tunnel passage, longitudinal edges of the sheets being formed with continuous interlocking tongues and grooves to enable the sheets to be connected together using adhesive to form the lining section, wherein side walls of each tongue and of each groove taper along substantially their full length.

The applicant has found that the use of a tapered tongue and groove connection between the sheets of each lining section enables the joint formed by bonding the tongue and groove together with an adhesive to satisfy the requirement that the flexural strength of the joint exceeds that of the pipe, and that the bending stresses supported by the joint also exceed those supported by the pipe. One particularly important aspect of the tapered tongue and groove connection is tat adhesive placed in the groove is distributed uniformly around the tongue and groove joint during insertion of the tongue into the groove. This uniform distribution was found not to occur in the tongue and groove joint of GB 2087456.

Preferably, the length of the tongue or groove is between two and four times the width thereof at the widest point. This range is believed to provide the optimum characteristics for the joint. The angle of taper is preferably between 4 and 15°.

The lining section may comprise a base sheet and two side sheets. The use of three sheets for each lining section improves the structural rigidity, since for a given set of three lengths of the sides of a triangle, a unique triangle is defined.

Preferably, the shapes of the tongues and grooves are selected such that each side sheet can be supported on a respective side of the base sheet solely by engagement of the tongue and groove connection with the base sheet, and with both side sheets supported by the base sheet, the side sheets can be manoeuvred sufficiently to engage the tongue and groove connection between the two side sheets.

This arrangement facilitates the assembly of each lining section from the individual sheets. This may be particularly important, since the diameter of the lining may typically vary up to approximately 2.5m and the length of each section may also vary up to approximately 6m. The self supporting structure defined above enables each side sheet to be placed in position individually, and when the two sheets are in place they may be manipulated in order to join the tongue and groove joint connecting the two side sheets, which will normally be located at the top of the lining.

A lining system will preferably comprise a plurality of lining sections of the invention, which are coupled together end-to-end in use to line the sewer.

The invention also provides a method of assembling the lining sections, the method comprising:
positioning the base sheet on the ground;
inserting an adhesive into the grooves of the three tongue and groove connections;
mounting the two side sheets, one on each side of the base sheet, the side sheets being self-supporting by the tongue and groove connections with the base sheet; and
engaging the tongue and groove connection between the two side sheets.

This method takes advantage of the self-supporting structure discussed above.

To line a sewer or tunnel, a plurality of the lining sections are assembled by this method, and after curing of the adhesive the assembled lining sections are inserted into the sewer to form a lining, with the space between the lining and the wall of the sewer being filled with grouting.

The invention also provides a method of manufacturing the sheets for the sewer or tunnel lining system, comprising:
providing a mould defining the shape of the sheet, in which the two longitudinal edges of the sheet are provided with tongue or groove connections;
lining the mould with layers of glass reinforced plastic material, the layers of glass reinforced plastic substantially filling the tongue or groove portions of the mould;
providing a substantially air tight covering over the mould, an air expulsion port being provided for expelling air from the space defined beneath the covering;
creating a partial vacuum in the space defined beneath the covering by drawing air from the expulsion port;
inserting a thermosetting resin into the space defined by the covering, the resin being introduced under the action of the partial vacuum;
removing the covering;
providing further layers over the plastic and resin layer to define the sheet.

According to this method, the tongue and groove connection parts of each sheet are formed integrally with the sheet from glass reinforced plastic material. Furthermore, the introduction of the resin to the glass reinforced plastic material under a vacuum avoids the formation of air pockets within the resulting structure, to increase the structural qualities of the tongue and groove parts of each sheet.

The further layers may comprise a layer of sand and resin mixture, and a further layer of glass reinforced plastic material and associated resin.

The invention will now be described by way of example, with reference to and as shown in the accompanying drawings in which:
Figure 1 shows schematically an existing sewer system which has been lined using a lining system according to the invention;
Figure 2 shows in greater detail the tongue and groove connection between sheets forming the lining sections for a lining system of the invention;
Figure 3 illustrates schematically the assembly method for the lining sections;
Figure 4 shows the structure of the lining material;
Figure 5 shows in greater detail the composition of the liner in the vicinity of a groove joint; and
Figure 6 shows an apparatus for forming sheets for a sewer lining system of the invention.

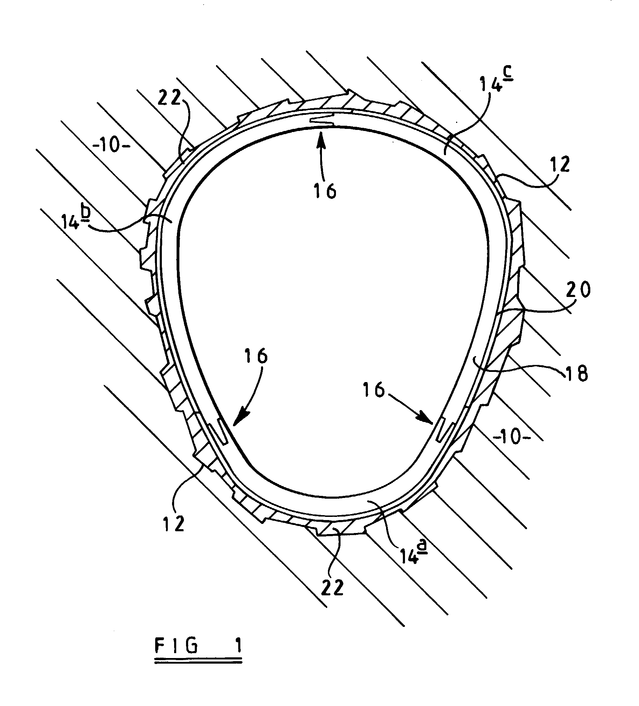

Figure 1 shows an existing sewer or other tunnel system 10 in which the wall 12 defining the channel requires repair. For this purpose, a lining 14 is introduced having a cross section which is selected depending upon the shape of the existing passageways. A preferred lining structure in accordance with the invention comprises three sheets as shown in Figure 1, a base sheet 14a and two side sheets 14b, 14c. In order for the resulting lining structure to be suitable for uses in which external ground water is present, for example where there is a high water table, the structure has to act as a single ring. Therefore, the joints 16 between the sheets 14 must be able to transfer stresses. Furthermore, the flexural strength of each joint must match or exceed the flexural strength of the lining in general, and equally the bending stresses supported by the joint must match or equal those supported by the remainder of the lining wall. In such a case, the resulting lining satisfies the requirements defined in the Type 2 definition of the Water Research Centre manual, whilst providing the advantage of reduced transportation costs.

It is preferred for the joints to be located at the positions of lowest bending moment, for example at the points where there is cross-over between positive and negative bending moment. However, it is not always possible with three sheets for the joints to be located at these points.

The sheets 14 shown in Figure 1 comprise a main body 18 of the liner and an additional outer portion 20 which enables a spigot and socket joint to be formed between adjacent lining sections. Thus, the three sheets 14a, 14b, 14c together comprise an annular lining section, and a number of lining sections are joined end-to-end to form a continuous lining for the tunnel or sewer system 10. Typically, the lining has a diameter of between 1m and 2.5m, and the length of individual sections will vary up to 6m.

A grout 22 is pumped between the outside of the lining and the inside of the wall 12 so that the original wall 12, the grout 22 and the lining 14 together define a new passage wall. The distribution of stresses within this new wall is such that the tensile stresses existing in the original wall 12 are greatly reduced, and the lining also acts as a barrier to prevent further chemical deterioration of the original structure.

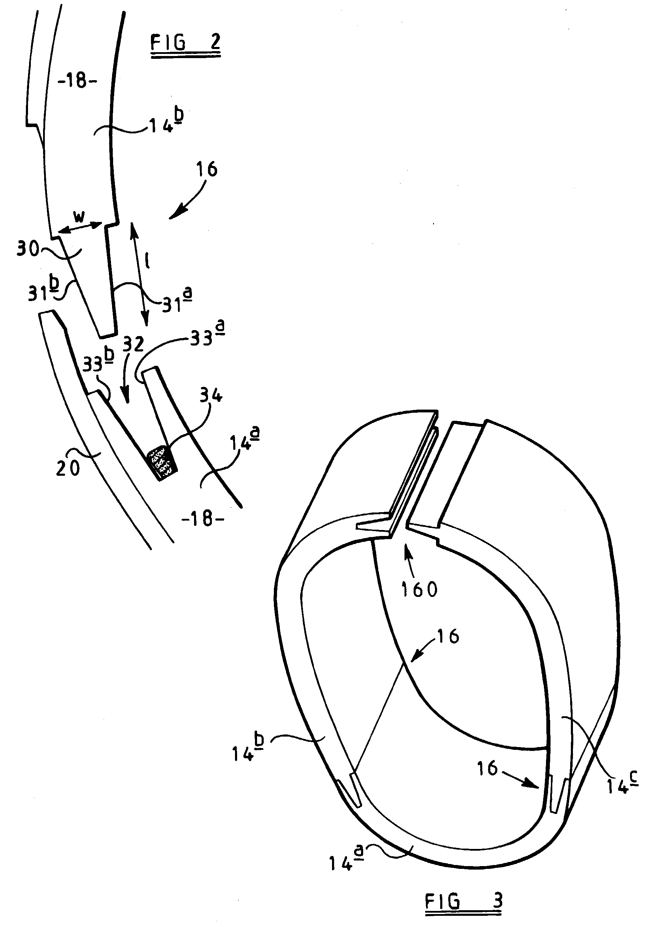

The invention is particularly concerned with the joints 16, and one such joint is shown in greater detail in Figure 2.

The joint 16 comprises a tongue 30 and groove 32, which have corresponding profiles. The tongue 30 has a length 1 which is between 2 and 4 times the width w at the widest point. The two opposing faces 31a, 31b each taper inwardly along their length. Preferably, the taper is uniform, as shown in Figure 2. This provides the advantage that upon insertion of the tongue 30 into the groove 32, the spacing between the faces 31a, 31b and the corresponding internal faces 33a, 33b of the groove 32 is uniform over the length of the tongue and groove connection. This spacing decreases progressively as the tongue 30 is inserted into the groove 32. The result of this is that the body of adhesive 34 placed in the base of the groove 32 becomes uniformly distributed over the faces of the tongue and groove connection. The angle of inclination of the faces may be equal and may, for example, lie in the range 4-15°, and preferably 7-12°.

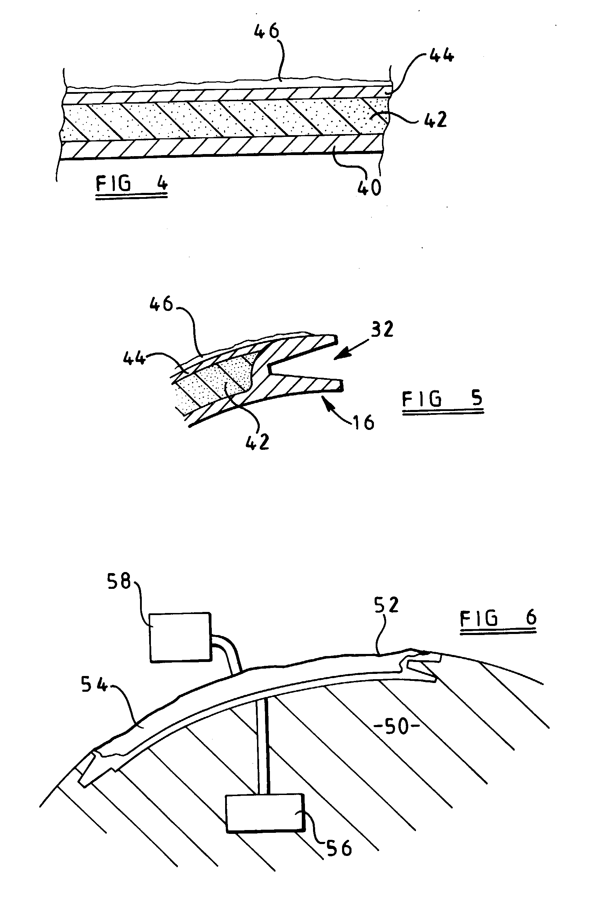

This design of tongue and groove connection has been found to provide the best structural properties of the resulting assembled lining section. A further advantage is explained with reference to Figure 3.

The lining sections formed using the sheets 14a to 14c will typically be assembled before being inserted into the tunnel or sewer system being repaired. To facilitate assembly of the components, which may have significant length, the tongue and groove joints 16 are also designed so that each side sheet 14b, 14c is self-supporting by virtue solely of the joint 16 between the side sheet 14b, 14c and the base sheet 14a. However, as shown in Figure 3, the design of the joint 16 is also such that once mounted in position, the side sheets can be manipulated sufficiently to enable the joint 160 between the two side sheets 14b, 14c to be opened and closed, before the adhesive 34 in the joints has cured. For the purposes of illustration, a short lining section is illustrated in Figure 3, and the spigot and socket connections at the ends of the section have been omitted for clarity. A plurality of the sections as shown in Figure 3 would be assembled end-to-end in order to provide a lining system.

One preferred structure of the main body 18 of the lining is described with reference to Figure 4. The innermost surface of the lining is defined by a glass reinforced plastics layer 40 which provides the main structure of the lining. The plastic layer 40 is formed by applying a thermosetting resin onto a glass fibre mesh, or glass fibre particles which are obtained by passing the mesh (roving) through a chopping gun. The thermosetting resin is of the isophthalic type, for example neopentylglycol. The glass fibre material may comprise corrosion resistant glass, for example having no borosilicone. The glass fibre sheets used to form the layer 40 may comprise a lower surface tissue, which gives rise to a resin rich surface during curing, which provides a chemical barrier for the remainder of the layer 40.

A layer 42 comprising a sand and resin mixture is provided over the plastic layer 40 to give the overall structure the desired thickness. The desired thickness will be a function of the intended stress profile to be obtained when the lining is combined with the grout material and the wall of the original structure. On top of the sand/resin layer 42 is provided a further glass reinforced plastic layer 44 and a layer of aggregate 46 which defines the outer surface of the lining. This aggregate layer 46 provides a key for the grout material to be inserted between the lining and the original structure.

The grout material 22, shown in Figure 1, comprises a concrete mix, which may be introduced by pumping or spraying.

As discussed above, the thicker inside glass reinforced plastic layer 40 provides the main structural rigidity of the lining. It is therefore desirable for this layer 40 to define the tongue and groove connections 16, and as shown in Figure 5 the manufacturing process is such that this layer 40 forms the jaws of the groove 32, and also the tongue, although not shown.

The adhesive 34 (shown in Figure 2) used for bonding the tongue and groove joints preferably comprises a thermosetting structural resin. A polyurethane, polyester or epoxy resin may be used for this purpose.

As mentioned with reference to Figure 1, the lining sections may be connected together by lengthwise tongue and groove joints, and as is known in the prior art various measures may be adopted to prevent the seepage of the grout material, which may be introduced under significant pressures, through the gaps between adjacent lining sections. Similarly, measures may be employed to ensure that the grouting operation does not apply a force which tends to separate the tongue and groove joints 16. For example, a further outer collar may be provided in addition to the portion 20 shown in Figure 1.

A preferred manufacturing method for the lining sheets 14 is described with reference to Figure 6.

A mould 50 is provided which defines the required shape of the section 14. The glass reinforced plastic mesh is applied in sheets to the mould, or else cut fibres may be sprayed uniformly over the surface area of the mould. As shown in Figure 6, additional glass fibre material is placed at the part of the mould 50 defining the tongue and groove connections of the sheet 14. Once the required quantity of glass fibre is in place, a covering 52 is secured in an airtight manner over the mould 50 to define an enclosed air space 54 between the surface of the mould 50 and the covering 52. A pump 56 is used to extract air from the space 54 to define a partial vacuum within that space. The thermosetting resin is then applied to the space from a supply 58. Under the influence of the partial vacuum, the resin is drawn to the surface of the mould 50 thereby impregnating the glass structure to form the layer 40, without any air pockets. The covering 52 is then removed and the vacuum system is deactivated, and the subsequent layers are applied in conventional manner. For example, the sand and resin layer 42 may be applied using rollers, and a uniform thickness may be obtained using gauges. The further glass reinforced plastic layer 44 may be applied manually in conventional manner.

Although an egg-shaped passageway has been shown in the drawings, the invention is of course applicable to any existing shape of tunnel or sewer system. Similarly, a threepart liner section has been shown, and this provides a structurally rigid arrangement, as a result of triangulation. Nevertheless, the invention is equally applicable to lining sections using a different number of sheets.

## Claims

1. A sewer or tunnel lining section comprising two or more sheets which in use are assembled to define the lining section, the section having a generally annular cross section, the shape of which is selected depending upon the shape of the sewer or tunnel passage, longitudinal edges of the sheets being formed with continuous interlocking tongues and grooves to enable the sheets to be connected together using adhesive to form the lining section, wherein side walls of each tongue and of each groove taper along substantially their full length.

2. A sewer or tunnel lining section as claimed in claim 1, wherein the length of the tongue and depth of the groove is between 2 and 4 times the width thereof at the widest point.

3. A sewer or tunnel lining section as claimed in claim 1 or 2, wherein the angle of taper is between 4 and 15°.

4. A sewer or tunnel lining section as claimed in any preceding claim, comprising a base sheet and two side sheets.

5. A sewer or tunnel lining section as claimed in claim 4, wherein the shapes of the tongues and grooves are selected such that each side sheet can be supported on a respective side of the base sheet solely by engagement of the tongue and groove connection with the base sheet, and with both side sheets supported by the base sheet, the side sheets can be manoeuvred sufficiently to engage the tongue and groove connection between the two side sheets.

6. A sewer or tunnel lining system comprising a plurality of lining sections as claimed in any preceding claim which are coupled together end-to-end.

7. A method of assembling a sewer or tunnel lining section as claimed in claim 5, the method comprising:
positioning the base sheet on the ground;
inserting an adhesive into the grooves of the three tongue and groove connections;
mounting the two side sheets, one on each side of the base sheet, the side sheets being self-supporting by the tongue and groove connections with the base sheet; and
engaging the tongue and groove connection between the two side sheets.

8. A method of lining a sewer or tunnel, comprising:
assembling a plurality of sewer or tunnel lining sections using the method of claim 7;
after curing of the adhesive, inserting the assembled lining sections into the sewer to form a lining; and
filling the space between the lining and the wall of the sewer or tunnel with grouting.

9. A method of manufacturing a sheet for a sewer or tunnel lining system, comprising:
providing a mould defining the shape of the sheet, in which the two longitudinal edges of the sheet are provided with tongue or groove connections;
lining the mould with layers of glass reinforced plastic material, the layers of glass reinforced plastic substantially filling the tongue or groove portions of the mould;
providing a substantially air tight covering over the mould, an air expulsion port being provided for expelling air from the space defined beneath the covering;
creating a partial vacuum in the space defined beneath the covering by drawing air from the expulsion port;
inserting a thermosetting resin into the space defined by the covering, the resin being introduced under the action of the partial vacuum;
removing the covering;
providing further layers over the plastic and resin layer to define the sheet.

10. A method as claimed in claim 9, wherein the further layers comprise a layer of sand and resin mixture, and a further layer of glass reinforced plastic material and associated resin.
